Europäisches Patentamt

European Patent Office

Office européen des brevets

(19)

(11) Numéro de publication: **0 024 972**
**A1**

(12)

# DEMANDE DE BREVET EUROPEEN

(21) Numéro de dépôt: **80401166.6**

(22) Date de dépôt: **08.08.80**

(51) Int. Cl.³: **B 60 D 1/00**

(30) Priorité: **24.08.79 FR 7921364**

(43) Date de publication de la demande:
**11.03.81 Bulletin 81/10**

(84) Etats Contractants Désignés:
**DE GB IT SE**

(71) Demandeur: **ATTELAGES LEMOINE- LA MECANO-SOUDURE REMOISE**
**1 rue du Commandant Barbier Zone Industrielle Ouest**
**F-51057 Reims Cedex(FR)**

(72) Inventeur: **Mijot, Guy**
**3 G rue des 16e et 22e Dragons**
**F-51100 Reims(FR)**

(72) Inventeur: **Dienne, Didier**
**13 rue Jean-François Millet**
**F-02190 Guignicourt(FR)**

(72) Inventeur: **Martinot, Roger**
**79 rue Jobert Lucas**
**F-51100 Reims(FR)**

(72) Inventeur: **Canon, Hervé**
**3 rue Georges Lundy**
**F-51110 Beine-Nauroy(FR)**

(74) Mandataire: **Guyard, Alain**
**Cabinet Technique CH. ASSI & L. GENES 41 rue des Martyrs**
**F-75009 Paris(FR)**

(54) Barre réversible de remorquage pour tracteurs agricoles.

(57) Barre réversible de remorquage pour tracteurs agricoles, comportant à une extrémité un crochet de traction 21 et à l'extrémité opposée une chape de remorquage pour des machines tractées actionnées par une prise de force du tracteur, comprenant une pièce contre-coudée 2, fixée par des boulons 3 dans un plan à 90° avec celui du crochet et dans laquelle on peut introduire une broche de fixation 4 qui pénètre dans des alésages ad hoc 31c de la barre, et caractérisée en ce qu'elle est formée de deux éléments, à savoir un crochet 21 de longueur fixe dont la tige 21b est fourchue et percée d'alésages 21c pour le passage d'organes de fixation 22 à une partie percée d'alésages correspondants 31a d'un élément 31 dont la longueur est déterminée en fonction du type de tracteur auquel il est destiné et qui porte à son extrémité libre, dans les alésages 31c précités, la chape de remorquage 2 à 4 précitée.

Fig. 4

EP 0 024 972 A1

- 1 -

Barre réversible de remorquage pour tracteurs
agricoles.

L'invention concerne une barre réversible de remorquage pour tracteurs agricoles, présentant
des avantages sur certains types de barres utilisées
à ce jour. Ces barres connues, de section carrée,
comportent à une extrémité un crochet de traction et
à l'extrémité opposée une pièce contre-coudée, fixée
par des boulons dans un plan à 90° avec celui du crochet et dans laquelle on peut introduire une broche
de fixation qui pénètre dans un alésage ad hoc de la
barre, ce qui constitue une chape de remorquage pour
des machines tractées actionnées par la prise de force d'un tracteur. A l'heure actuelle, une barre de ce
type est monobloc, et le crochet est réalisé par forgeage. Or, si la distance qui sépare la barre de la
prise de force du tracteur est déterminée avec précision, il n'en est pas de même de la distance qui sépare cette prise de force du plan de référence de positionnement du crochet, qui est un plan vertical tangent aux pneus arrière du tracteur; cette distance
peut varier entre de très larges limites suivant le
type de tracteur, de sorte qu'il est indispensable de
prévoir des longueurs différentes pour la barre de
traction, ce qui rend plus compliquée une fabrication
en grande série.

L'invention a donc pour objet une barre
réversible de remorquage pour tracteurs agricoles,
montée de façon amovible dans un châssis plus ou moins
rectangulaire susceptible d'être fixé, de façon éventuellement pivotante, par une de ses extrémités, à un
tracteur, et formée d'un crochet de traction et d'un
élément à l'extrémité duquel opposée au crochet est
fixée une chape de remorquage pour des machines tractées actionnées par une prise de force du tracteur et comprenant une pièce contre-coudée fixée par des boulons dans un plan à 90° avec celui du crochet et dans laquelle on peut introduire une broche de fixation qui pénètre dans des alésages ad hoc de l'élément, et caractérisée en ce que: a) l'élément précité est massif et sa longueur, invariable, est déterminée en fonction du type de tracteur auquel il est destiné; et b) le crochet est de longueur fixe et sa tige est fourchue et percée d'alésages pour le passage d'organes de fixation à une partie percée d'alésages correspondants de l'élément précité.

Par le brevet anglais n° 1 241 083, on connait une barre de remorquage comprenant à une extrémité un crochet à tige creuse de section carrée, à l'intérieur de l'extrémité libre de laquelle on peut fixer les deux bras séparables d'une chape dont le bras supérieur peut être utilisé seul. Cette barre est montée de façon amovible dans un dispositif de remorquage, comportant un cadre extérieur et un cadre intérieur, susceptible d'être fixé à l'arrière d'un tracteur, et dans lequel la barre de remorquage peut prendre deux orientations opposées, afin de permettre soit l'utilisation du crochet, soit celle de la chape ou seulement de son bras supérieur. La barre de remorquage peut être située soit entièrement à l'intérieur du cadre du dispositif de remorquage avec seul le crochet dépassant, soit avec son crochet à l'intérieur, sensiblement à la hauteur du système de fixation du dispositif au tracteur, et avec la chape ou seulement son bras supérieur faisant largement saillie par rapport au dispositif.

Dans le brevet français n° 2 279 577, on a décrit un attelage "trois points" dans lequel le porte-crochet supérieur comporte deux parties tubulaires guidées télescopiquement l'une dans l'autre, ce qui permet de donner au crochet une longueur variable suivant les besoins, mais la barre porte-crochet ne comporte pas une chape à son extrémité opposée au crochet et fonctionne donc uniquement en poussée.

Le brevet des Etats Unis n° 2 873 981 prévoit une barre d'accrochage et une barre de remorquage, dont l'une peut être fixée à un tracteur et l'autre à une remorque, qui coopèrent l'une avec l'autre et qui peuvent coulisser l'une par rapport à l'autre de façon à avoir la longueur totale désirée. Ce brevet ne décrit que le mode de fixation au tracteur d'une extrémité de la barre d'accrochage, munie d'une chape, qui est fixée au tracteur par une goupille. Mais il n'indique absolument pas la forme de l'extrémité de la barre de remorquage qui doit être fixée au véhicule à remorquer.

Enfin, on connait par le brevet des Etats Unis n° 3 404 901 une barre de traction formée de trois éléments, à savoir une tige intérieure et deux sections tubulaires qui peuvent coulisser l'une dans l'autre, et à l'extrémité libre de la section extérieure est fixé un crochet dont l'ouverture est dirigée vers le bas pour recevoir un organe solidaire de la pièce à remorquer.

On va maintenant décrire plus en détail, à titre d'exemples non limitatifs, un mode de réalisation de l'invention et une variante de détail, avec référence aux dessins annexés sur lesquels :

La figure 1 est une perspective d'une barre de remorquage connue.

Les figures 2 et 3 sont deux perspectives montrant la barre précitée dans ses deux positions possibles.

La figure 4 est une perspective éclatée

- 4 -

d'une barre de remorquage suivant l'invention.

La figure 5 est une perspective analogue à

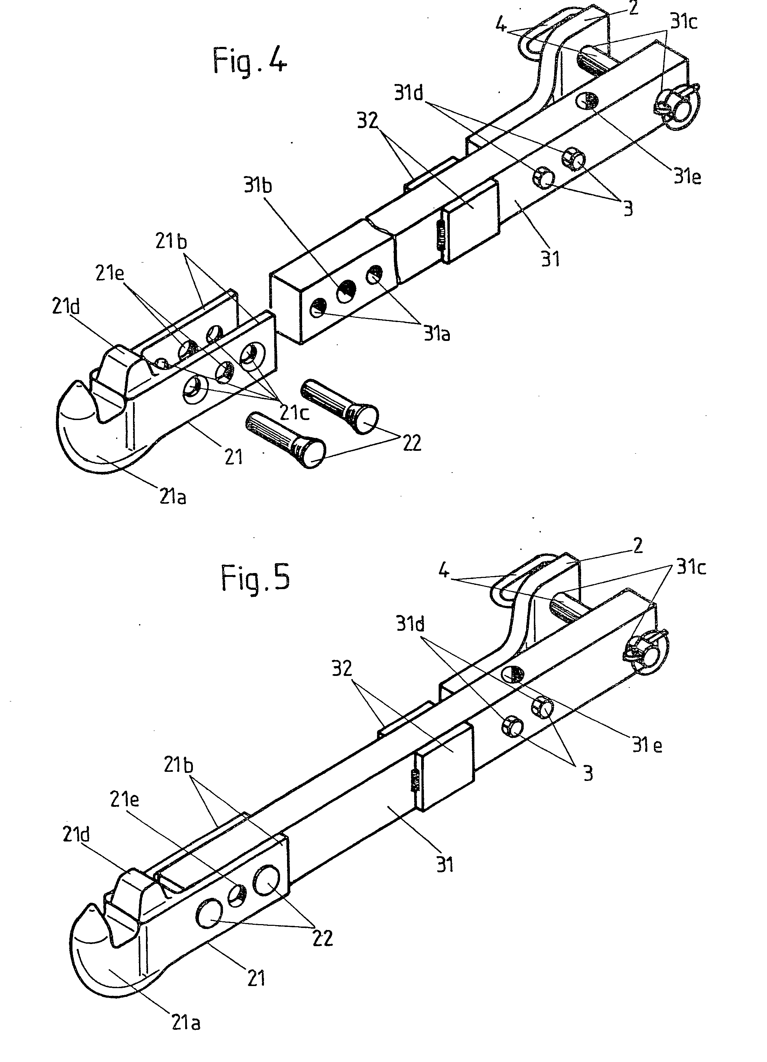

la figure 4 mais montrant les deux éléments de la
barre assemblés.

La figure 6 est une perspective, analogue à
la figure 4, d'une variante.

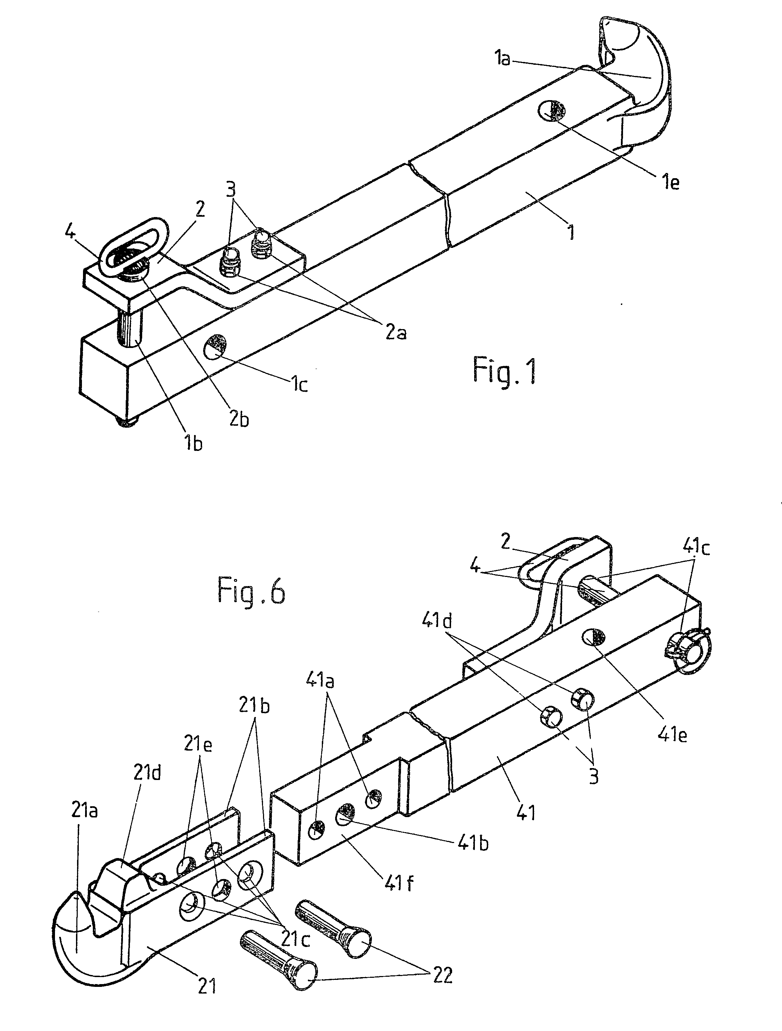

Sur la figure 1, on voit une barre réversible connue 1 dont l'extrémité 1a a la forme d'un
crochet pour tracter un véhicule ou une machine agricole, tandis qu'à l'extrémité opposée est montée une
pièce contre-coudée 2 fixée par des boulons 3 qui
pénètrent dans des alésages 2a de la pièce 2 et des
alésages correspondants (non représentés) de la barre 1. Une broche 4 qui traverse un alésage 2b de la
pièce 2 et un alésage 1b de la barre 1 constitue
avec la pièce 2 et la barre 1 une chape de remorquage destinée aux machines qui doivent être actionnées
par la prise de force d'un tracteur. A peu près dans
le plan vertical passant par le milieu du raccordement entre les deux parties de la pièce 2 et perpendiculairement à la longueur de la barre 1 est percé
dans cette barre un alésage 1c dont le rôle sera expliqué ci-après.

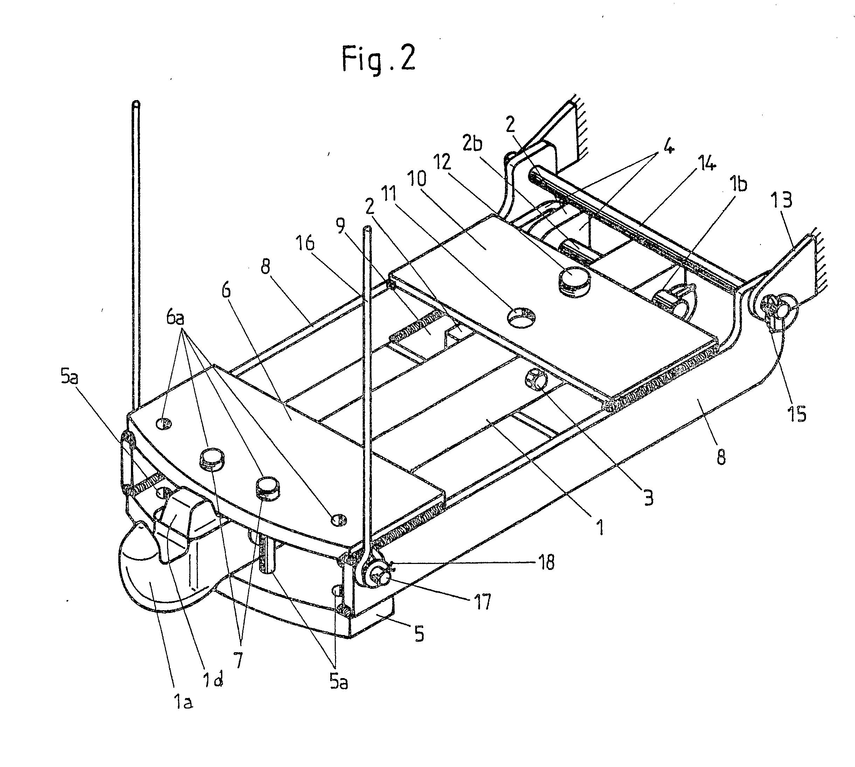

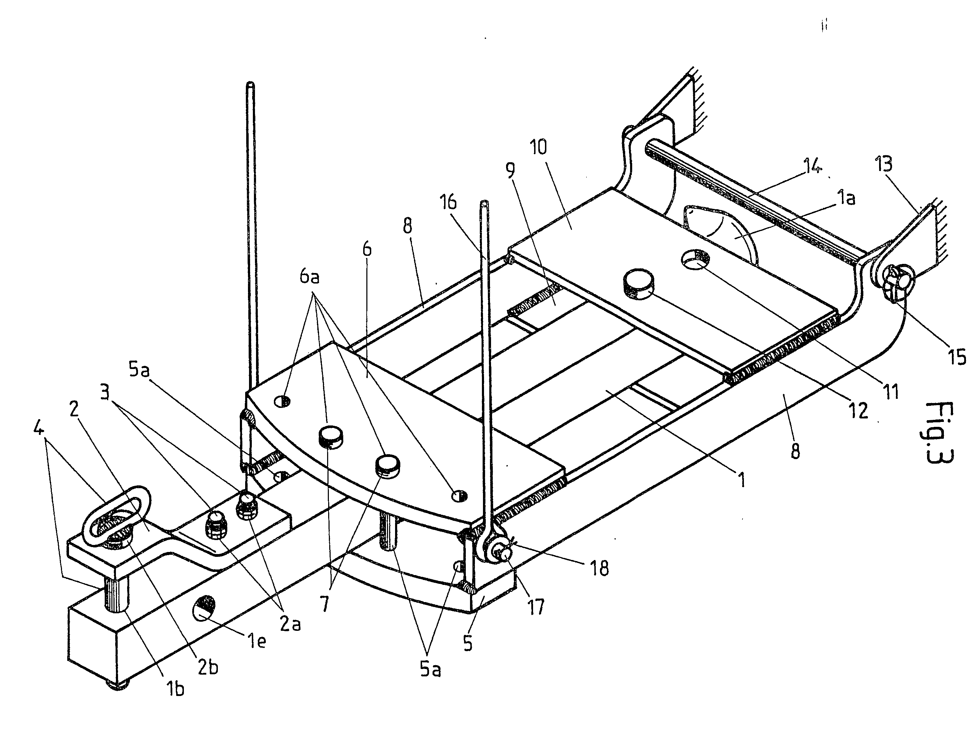

Les figures 2 et 3 montrent comment la barre 1 peut être immobilisée dans un châssis de type
connu par exemple en acier soudé et constitué par
deux plaques horizontales antérieures superposées 5
et 6 percées d'alésages respectifs 5a et 6a pour le
passage de broches de maintien 7, deux pièces latérales 8, et deux plaques horizontales postérieures
superposées 9 et 10. Ces plaques sont percées chacune de deux alésages 11 (seuls ceux de la plaque 10
étant visibles), dont l'uh ou l'autre, suivant que la
barre 1 occupe la position de la figure 2 ou celle de

- 5 -

la figure 3, est aligné verticalement avec l'alésage 1c précité ou avec un alésage 1e (figure 1),
tous deux percés dans la barre 1 pour recevoir une
broche 12 (figures 2 et 3). L'ensemble précité peut
être soit rigidement fixé sous le pont arrière du
tracteur, de manière connue mais non représentée,
soit monté pivotant à son extrémité postérieure sur
le tracteur grâce à des oreilles de fixation 13 et
à un axe de rotation 14 muni à chaque extrémité de
goupilles de maintien 15, tandis qu'à son extrémité
antérieure, des tringles 16 relient de manière connue l'ensemble aux bras de relevage (non représentés) du tracteur. Les tringles 16 sont montées pivotantes autour d'axes 17 fixés chacun à une des pièces latérales 8, et ne peuvent pas se séparer accidentellement de ces axes grâce à des dispositifs appropriés 18.

Sur la figure 2, l'ensemble qui vient d'être décrit est un "crochet ramasseur" destiné à relier à un tracteur une remorque semi-portée. Dans ce
cas, la butée 1d sert de rampe d'accrochage pour
guider l'anneau.

Sur la figure 3, la barre 1 est positionnée pour le remorquage de machines et peut soit osciller librement entre les plaques 5 et 6, auquel cas
les broches 7 sont enlevées des alésages 5a, 6a,
soit effectuer un mouvement plus ou moins limité entre les broches 7 placées dans une paire appropriée
de ces alésages. Dans ce cas, la barre 1 et sa chape 2 font saillie vers l'avant par rapport aux plaques 5 et 6 de façon que la broche 4 soit située à
la distance normalisée de l'embout de la prise de
force (non représentée) du tracteur.

Sur les figures 4 et 5, on a représenté un premier mode de réalisation d'une barre de remorquage suivant l'invention. Cette barre est formée de deux parties, 21 et 31. La première comprend un crochet 21a identique au crochet 1a de la figure 1, qui possède comme lui une butée, 21d, et qui se prolonge vers l'arrière par deux branches parallèles 21b formant une fourche dont la largeur extérieure est égale à la longueur des côtés de la section transversale carrée de la barre 1 de la figure 1. Il est ainsi possible soit d'insérer le crochet 21 entre les plaques 5 et 6 de la figure 2, soit de le "coucher" entre les plaques 9 et 10 de la figure 3. Chaque branche de la fourche 21b est percée de deux alésages 21c pour la fixation du crochet 21 à la partie 31 de la barre; entre les alésages 21c est percé un alésage 21e destiné à recevoir la broche 12 lorsque la barre 21 - 31 est insérée dans l'ensemble 5 à 18, dans la position de la figure 3. La partie 31 de la barre, à section transversale rectangulaire, possède une extrémité antérieure percée de deux alésages 31a capables de venir en alignement avec les alésages 21c du crochet 21a, et d'un alésage 31b capable de venir en alignement avec l'alésage 21e pour recevoir la broche 12 en cas d'utilisation de la chape formée par les pièces 2 et 31. La fixation de la partie 21 à la partie 31 de la barre est réalisée par des rivets, des goupilles élastiques ou des boulons 22 qui traversent les alésages 21c et 31a (figures 4 et 5). Un alésage 31c parallèle aux alésages 31a et situé au voisinage de l'extrémité libre de la partie 31 de la barre est destiné à recevoir la broche 4 de la chape. La partie 31 de la barre est également percée d'alésages 31d (figures 4 et 5) à travers lesquels passent les boulons 3 de la chape. Un alésage 31e perpendiculaire aux alésages 31a à 31d et percé comme l'alésage 1c de la figure 1 à peu près en face du raccordement entre les deux parties de la pièce 2 est destiné à recevoir la broche 12 lorsque la barre 21 - 31 occupe la position de la barre 1 sur la figure 2. Enfin, la partie 31 de la barre possède deux plaquettes 32 qui lui donnent une section carrée permettant son insertion entre les plaques 5 et 6 lorsque la barre 21 - 31 occupe la position de la barre 1 sur la figure 3.

La figure 6 montre une variante de la figure 5 dans laquelle on utilise un crochet 21 associé à une barre 41, plus rigide que la barre 31 des figures 4 et 5 et de section carrée, ce qui permet de supprimer les plaquettes 32. La barre 41 est percée d'alésages 41a à 41e identiques aux alésages 31a à 31e de la figure 4, et elle possède une partie antérieure 41f amincie de manière adéquate pour pouvoir être insérée entre les branches 21b du crochet 21.

Les avantages que présente l'invention par rapport aux barres de remorquage connues sont multiples. On citera notamment : - le crochet rapporté 21, qui est la pièce soumise à une usure maximale, est moins onéreux à remplacer que la barre entière 1 de la figure 1;

- la barre 31 ou 41 est la seule pièce dont les dimensions doivent être appropriées à chaque type de tracteur, et sa section classique rend sa fabrication en série plus économique;

- les caractéristiques des aciers utilisés pour la fabrication du crochet 21 et des barres 31 ou 41 peuvent être différentes de façon à simplifier la

- 8 -

fabrication de chacune de ces pièces, et il en est
de même des traitements thermiques nécessaires,
puisque la dureté est la qualité essentielle que
doit posséder le crochet, tandis que l'élasticité
est la qualité essentielle que doit posséder la barre.

REVENDICATIONS

1 - Barre réversible de remorquage pour
tracteurs agricoles, montée de façon amovible dans un
châssis plus ou moins rectangulaire 5 à 18 susceptible d'être fixé de façon éventuellement pivotante,
par une de ses extrémités en 13, à un tracteur, et
formée d'un crochet de traction 21 et d'un élément 31
ou 41 à l'extrémité duquel opposée au crochet est fixée une chape de remorquage 2 à 4 pour des machines
tractées actionnées par une prise de force du tracteur
et comprenant une pièce contre-coudée 2 fixée par des
boulons 3 dans un plan à 90° avec celui du crochet et
dans laquelle on peut introduire une broche de fixation 4 qui pénètre dans des alésages ad hoc 31c ou
41c de l'élément 31 ou 41, et caractérisée en ce que :
a) l'élément 31 ou 41 est massif et sa longueur, invariable, est déterminée en fonction du type de tracteur auquel il est destiné; et b) le crochet 21 est
de longueur fixe et sa tige 21b est fourchue et percée d'alésages 21c pour le passage d'organes de fixation 22 à une partie percée d'alésages correspondants
31a ou 41a de l'élément 31 ou 41.

2 - Barre réversible de remorquage suivant
la revendication 1, caractérisée en ce que : a) l'élément 31 fixé au crochet 21 a une section rectangulaire dont les petits côtés sont égaux à la distance
qui sépare les branches 21b de la tige fourchue du
crochet 21 tandis que les grands côtés sont égaux à
la hauteur de ces branches; b) la distance qui sépare les faces extérieures des branches 21b est égale
à la hauteur de celles-ci; et c) en un point approprié de sa longueur, l'élément 31 possède sur ses
grands côtés des plaquettes identiques 32 dont l'épaisseur est telle qu'ajoutée à la distance qui sépare

- 10 -

les petits côtés de l'élément , ce dernier ait une section carrée.

3 - Barre réversible de remorquage suivant la revendication 1, caractérisée en ce que l'élément 41a fixé au crochet 21 a une section carrée égale à la distance qui sépare les faces externes des branches 21b de la tige fourchue du crochet et possède au voisinage de cette tige fourchue une partie 41b à section rectangulaire dont les petits côtés ont une largeur égale à la distance qui sépare l'une de l'autre les branches 21b précitées.

4 - Barre réversible de remorquage suivant la revendication 1, caractérisée en ce qu'au voisinage de la chape 2 à 4 de la barre et dans un plan parallèle à ceux des branches 21b de la tige fourchue du crochet 21, c'est-à-dire dans un plan parallèle à celui des parties planes de la pièce contrecoudée 2, est percée dans l'élément massif 31 ou 41 un alésage 31e ou 41e, et que dans les branches 21b précitées et dans la partie correspondante de l'élément 31 ou 41 sont percés des alésages alignés 21e et 31b ou 41b pour le passage d'une broche 12 de fixation de la barre à deux plaques horizontales superposées 9, 10 qui font partie du châssis connu précité 5 à 18 fixé en 13 au tracteur et sont percées d'alésages correspondants 11.

Fig.1

Fig.6

Fig. 2

Fig.3

Fig. 4

Fig. 5

| Catégorie | Citation du document avec indication, en cas de besoin, des parties pertinentes | Revendica-tion concernée |
|---|---|---|
| D | GB - A - 1 241 083 (AGRICULTURAL REQUISITES AND MECHANISATIONS) <br> * Page 2, ligne 41 - page 4, ligne 22; figures 1-6 * | 1,3,4 |
| D | FR - A - 2 279 577 (WALTERSCHEID) <br> * En entier * | 1 |
| D | US - A - 2 873 981 (GRANT) <br> * Figures 1-11 * | 1,2 |
| D | US - A - 3 404 901 (RAN) <br> * Figures 1-8 * | 1 |
| A | FR - A - 2 408 476 (DEERE) | 1 |
| A | FR - A - 2 368 210 (DAIMLER BENZ) | 1 |
| A | FR - A - 2 298 449 (BERTHOLOMEY) | 1 |
| A | FR - A - 1 176 642 (CIMA) | 1 |
| A | FR - A - 1 011 510 (POULLAIN) | 1 |

**DOCUMENTS CONSIDERES COMME PERTINENTS**

**CLASSEMENT DE LA DEMANDE (Int. Cl. 3)**

B 60 D 1/00

**DOMAINES TECHNIQUES RECHERCHES (Int. Cl. 3)**

B 60 D
A 01 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-10-1980 | ESPEEL |

OEB Form 1503.1  06.78